# EUROPÄISCHE PATENTANMELDUNG

(11) **EP 0 653 596 A2**
(43) Veröffentlichungstag der Anmeldung: **17.05.1995**
(21) Anmeldenummer: 94117764.4
(22) Anmeldetag: 10.11.1994
(51) Int. Cl.: F24J 2/46, F24D 11/00, F24D 19/00

(54) **Solarkollektor-Befüllung & Entleerung**

(30) Priorität: 11.11.1993 DE 4338604
(71) Anmelder: SANDLER ENERGIETECHNIK GMBH & CO KG, D-87600 Kaufbeuren (DE)
(72) Erfinder: Sandler, Martin, D-87600 Kaufbeuren (DE); Reich, Robert, D-87784 Westerheim (DE)
(74) Vertreter: Leonhard, Frank Reimund, Dipl.-Ing.

(57) **Zusammenfassung**

Das technische Gebiet der Erfindung ist das Befüllen und Entleeren eines Solarkollektors 3, der mit Wasser gefüllt ist und bei dem vermieden werden soll, daß Frostschäden eintreten. Dazu wird vorgeschlagen, das Entleeren allein durch die Schwerkraft zu veranlassen und durchzuführen, wobei die zum Solarkollektor 3 hinführende Rohrleitung 8c und die vom Solarkollektor 3 zurückführende Rohrleitung 9c über jeweils eine Zweigstelle 20,21 auf einen gemeinsamen Sammelbehälter 11 geschaltet V3,V4 werden.

Vor einem Entleeren kann durch Zumischen Mi,8a warmen Wassers oder durch bloßes Umwälzen 2 im Solarkollektor-Kreislauf 8b,8c,9c,9b,Z,Mi eine (notwendige) Entleerung noch verzögert, gegebenenfalls vermieden werden.

Nach einem Entleerungsvorgang kann der Solarkollektor mittels eines Druckerzeugers 10,M,P_{d} wieder befüllt werden, wobei das Wärmetransport-Medium über eine der genannten Rohrleitungen 8c,9c in den Kollektor 3 gepumpt wird und der dabei anstehende Druck etwa dem stationären Betriebsdruck des Solarkollektor-Leitungssystems 8a,8b,8c, 9c,9b,9a entspricht.

## Beschreibung

Die Erfindung befaßt sich mit einem Verfahren zum Entleeren eines mit einem Wärmetransportmedium gefüllten Solarkollektors, der sich auf dem Dach eines Gebäudes zur Aufnahme der von der Sonne herrührenden Wärmestrahlen befinden kann. Die Erfindung befaßt sich in gleicher Weise auch mit dem Befüllen eines entleerten Solarkollektors mit demselben Wärmetransportmedium. Dabei betrifft die Erfindung auch die zeitlich auseinanderliegende Kombination aus Entleerungsverfahren und Füllverfahren; meist mit dem Wärmetransportmedium (WTM) Wasser. Zur Ausführung dieser Verfahren wird ein ankoppelbares/ angekoppeltes Strömungs-Teilsystem (Anspruch 16) vorgeschlagen.

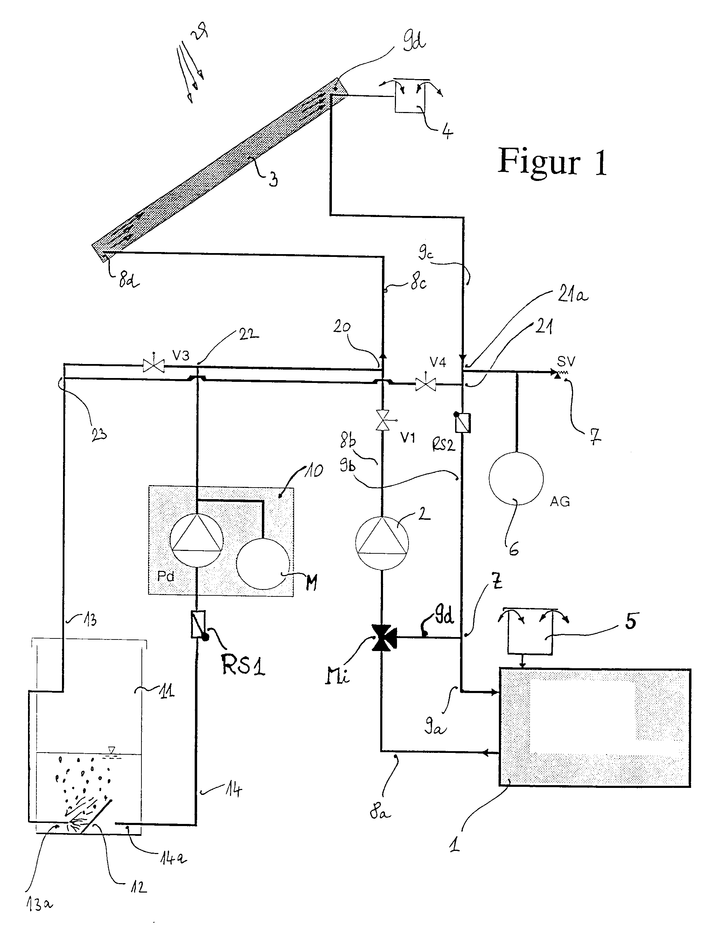

Im Stand der Technik wird in DE-B 39 35 932 (Pichler) eine Heizungsanlage mit einem Solarkollektor beschrieben. Dort ist (in den Figuren 2 und 5) das Prinzip erkennbar, wie bislang Solarkollektoren mit dem "Heizmedium" Wasser befüllt und entleert wurden, und zwar mittels eines Ausgleichsbehälters (dort mit 2 bezeichnet), in dem ein Gas mit erhöhtem Luftdruck vorgesehen ist. Bei Öffnen eines entsprechenden Ventiles (dort mit 20 bezeichnet) wird der Gasdruck das "Heizmedium" von unten über eine zum oberen Ende des Solarkollektors führende Leitung (Vorlauf) anheben, um das Wasser durch den Solarkollektor hindurchzuschieben und über die am unteren Ende vorgesehene zweite Rohrleitung (Rücklauf) weiter das Wasser vor sich her nach abwärts zu schieben. Damit wird der Vorlauf, der Solarkollektor selbst und dessen Rücklauf durch Druckgas nacheinander entleert entgegen der Betriebsströmungsrichtung. In ähnlicher - aber umgekehrter - Reihenfolge wird der Kollektor befüllt. Allein kann dies allerdings nicht mittels des Druckgases erfolgen, es wird zusätzlich eine Pumpe (dort mit 26 bezeichnet) benötigt, die das Wasser zunächst diejenige Rohrleitung hinaufpumpt, die am unteren Ende des Kollektors mündet (Rücklauf), die das Wasser dann durch den schrägstehenden Solarkollektor zu dem oberen zweiten Leitungsanschluß drückt, um dann von dort "stetig und kontinuierlich" das Wasser durch die am oberen Rand des Kollektors abzweigende, nach unten führende Rohrleitung (Vorlauf) hinabzupumpen, wobei das Druckgas - das zuvor das Wasser aus den Rohrleitungen preßte - in das Ausgleichsgefäß 2 zurückgedrängt wird. Die Füll-Strömungsrichtung entspricht der Betriebsströmungsrichtung des WTM.

Das Verfahren zur Befüllung & Entleerung arbeitet also sequentiell Rücklauf/Kollektor/Vorlauf bzw. vice versa, jeweils aufgrund oder gegen ein aufrechtzuerhaltendes Gaspolster. Ähnlich arbeitet auch die Befüllung/Entleerung gemäß DE-A 28 39 258 (Bosch) und DE-A 26 14 142 (Krumpe). Erstere verwendet das Ausgleichsgefäß des Heizungssystems als Sammelbehälter mit Gaspolster, letztere verwendet ein zusätzliches Sammelgefäß mit Luftpolster. Beides sind vollständig geschlossene Systeme.

Die erwähnten Verfahren mögen hinreichend funktionstauglich sein, leiden allerdings darunter, daß ein erheblicher Druck im Sammelgefäß/Ausgleichsgefäß bereitgehalten - und langfristig aufrechterhalten - werden muß, um das Wärmetransportmedium (meist: Wasser) aus den Leitungen gegen die Schwerkraft und den stationären Systemdruck hinauszudrücken.

Die Erfindung hat sich die Aufgabe gestellt, solche stationären Gasdrücke in den Rohrleitungen, die zum Solarkollektor führen, und in dem Sammelbehälter, in den ein Solarkollektor bei Frost entleert wird, zu vermeiden und gleichwohl eine Entleerung und Befüllung des Solarkollektors zu ermöglichen.

Das wird gemäß den technischen Lehren der Ansprüche 1 oder 2 oder 16 erreicht.

Überzeugender erster Gedanke der Erfindung ist es, beide Rohrleitungen (den Rücklauf und den Vorlauf), die zum Solarkollektor hinführen und von ihm wegführen, direkt auf einen drucklosen, gemeinsamen Sammelbehälter zu schalten (Anspruch 1); beide Rohrleitungen und der Solarkollektor selbst, der meist schräg angeordnet ist, werden so allein mit Hilfe der Schwerkraft entleert, wenn beide Solarkollektor-Rohrleitungen zum gas-drucklosen Sammelgefäß freigeschaltet werden (z.B. durch elektrisch gesteuerte Ventile). Die Abzweigung der Zu- und Rückführung vom und zum Kollektor kann dabei in jeder beliebigen vertikalen Höhe des Vorlaufes und des Rücklaufes erfolgen; sinnvoll ist es aber, die Abzweigung so zu legen, daß Vorlauf und Rücklauf des Solarkollektors auch insoweit entleert werden, als sie noch frostschaden-gefährdet sind.

Entsprechend der Abzweigungshöhe (dem damit definierten Rohrvolumen) und dem Volumen des Solarkollektors ist das Sammelgefäß gewählt; es ist nicht nur Zwischenspeicher, sondern Vollspeicher für das frostgefährdete WTM-Volumen.

In umgekehrter Weise kann der Solarkollektor befüllt werden, wobei über eine geeignete Strömungserzeugungseinrichtung, wie eine Druckanlage, ein Druck des Wärmetransportmediums erzeugt wird, der etwa dem stationären Druck bei vollständig gefülltem Rohrleitungssystem der Heizungsanlage entspricht (Anspruch 2). Die Druckerzeugung basiert nicht auf einem Gaspolster oder einem Gas/Luft-Überdruck, sondern dem Betrieb einer leistungsstarken Pumpe, wie Kreiselpumpe.

Sowohl Entleerung als auch Befüllung arbeiten dabei ohne stationäres Gasdruckpolster in einem "offenen" System. Das Ablaufen geschieht durch die Schwerkraft direkt und vollständig in den Sammelbehälter; das Füllen geschieht über den Strömungserzeuger, der eine Strömung nur dann zur Verfügung stellt, wenn sie auch benötigt wird. Maßgebend beim Füllen ist die Strömung, der Druck stellt sich aufgrund der Füllhöhe ein, er liegt etwas unter dem Druck des stationären Betriebsdrucks der Heizanlage.

Um beim Befüllen der Solarkollektoren eine ausreichende Entlüftung vorzusehen und die beim Füllen mit in das Rohrleitungssystem eingebrachte Luft, auch diejenige Luft, die sich im Solarkollektor selbst ansammelt, aus dem Rohrleitungssystem zu entfernen, wird vorgeschlagen, für eine angemessene Zeitdauer eine Zirkulation des Wärmetransportmediums vorzunehmen, bei der ein Strömungserzeuger in einen Kreislauf geschaltet ist, der im Sammelgefäß beginnt, über den Solarkollektor führt und wieder im Sammelgefäß endet (Anspruch 3). Nach Ablauf der angemessenen Zeit ist aufgrund der hohen Strömungsgeschwindigkeit der Großteil der angesammelten Luft sowohl aus dem Transportmedium als auch aus dem Kollektor entfernt und als Luftblasen aus dem drucklosen Sammelgefäß entwichen.

Angemessen sollte die Zeitdauer der Strömungsphase hinsichtlich der Länge des Rohrleitungssystems zum/vom Solarkollektor sein. Ist der Weg länger, so wird auch eine längere Strömungsphase vorzusehen sein; bei kürzeren Wegen zum/vom Kollektor wird dagegen nur eine kurze Strömungsphase eingesetzt. Die angemessene Zeitdauer bei normalen Solar-Heizkreisläufen liegt etwa zwischen 1min und 10min.

Auch die Entlüftung in der Strömungsphase profitiert deshalb vom überdruckfreien Sammelgefäß. Hier zeigt sich der Vorteil des offenen Systems im Befüllungs-/Entleerungskreislauf besonders deutlich.

Es kann eine Ruhephase vorgesehen sein, bei der sich ein Druck im Rohrleitungssystem etabliert, der etwa dem stationären Anlagendruck entspricht, bei der die Strömungs-Erzeugungseinrichtung, nachdem sie den stationären Druck aufgebaut hat, abgeschaltet ist und bei der sich die noch im Wärmetransportmedium befindlichen Gasblasen und -bläschen im obersten Bereich des Solarkollektors sammeln (Anspruch 4,5). Dort können sie über eine automatische Be- und Entlüftungseinrichtung, die dort vorgesehen ist, entweichen. Diese Ruhephase kann gemäß vorteilhafter Gestaltung der Erfindung verschieden groß gewählt werden.

Alternativ zur Strömungsphase (Anspruch 3) kann die Ruhephase sich unmittelbar an den Befüllungsvorgang anschließen (Anspruch 5). Der wesentliche Teil der beim Befüllen des Solarkollektors mit dem Wärmetransportmedium eingeschlossenen Luft wird während ihr über eine Entlüftung entweichen, die am Solarkollektor, insb. an dessen oberen Ende, angebracht ist. Diese Ruhephase unmittelbar nach Befüllen ist - ohne Einlegen einer Strömungsphase - hinsichtlich der Entlüftung ebenso wirksam, wie die Strömungsphase, allerdings benötigt sie spürbar mehr Zeit als die Strömungsphase zum Entlüften im Sammelgefäß benötigt.

Eine noch bessere Entlüftung auch der letzten "Winkel" des Rohrleitungssystems und des Solarkollektors wird dann erreicht, wenn sich an die angemessene Strömungsphase eine kurze Ruhephase anschließt (Anspruch 4).

Sowohl während der kurzen Ruhephase, die sich an die angemessene Zeitdauer der Strömungsphase anschließt als auch während der längerfristigen Ruhephase ohne Strömungsphase steigt die im Kreislauf (noch) enthaltene Luft zum höchsten Punkt des Solarkollektors auf, wo sie über eine dort angebrachte automatische Be- und Entlüftungseinrichtung entweichen kann (Anspruch 9).

Einströmung und Entnahme zum/vom Sammelgefäß sollte dauernd unterhalb des Füllstandes des Sammelbehälters liegen (Anspruch 7).

In der Strömungsphase (Anspruch 3) wird in kürzerer Zeit mehr Luft abgeschieden, wenn der Zulauf zum Sammelgefäß gegen eine Prallwirkung habende Schrägplatte strömt (Anspruch 8).

Eine konstruktiv besonders einfach und die Anströmung vereinfachende Bauvariante ist es, die von Kollektor gemeinsam in das Sammelgefäß geschalteten Rohrleitungen vor dem Sammelgefäß zusammenzuführen und den einrohrigen Zulauf nahe dem Boden des Sammelgefäßes zu legen (Anspruch 7).

Wird die Anströmplatte verwendet, kann der Entnahmestutzen in einem strömungs- und luftarmen Bereich auf der der Anströmung entgegengesetzten Seite der Platte angeordnet werden.

An die kurze Ruhephase, die einige Minuten dauern kann (Anspruch 4) oder an die, die angemessene Dauer der Strömungsphase übersteigende längere Ruhephase (Anspruch 5) schließt sich der normale Betrieb der Heizungsanlage an (Anspruch 6), bei dem der Teil des Hydrauliksystems, der vom und zum Sammelbehälter aus dem regulären Rohrleitungssystem abzweigt, abgekoppelt wird.

Während des normalen "geschlossenen" Kreislaufes des Wärme-Transportmediums zum Solarkollektor und von diesem wieder zurück in einen Wärmespeicher oder Wärmeabgabesystem kann die noch in geringem Umfang im Rohrleitungssystem vorhandene Luft, die durch das Befüllen eingebracht wurde, an einem Luftabscheider entweichen, der im Bereich des Speichers bzw. Wärmeabgabesystems vorgesehen ist (Anspruch 9) und der bei Anstehen von Gasblasen öffnet.

War der Wärmetauscher bislang ein Erfordernis des Standes der Technik, um das Volumen des Wärmekreislaufs zum Solarkollektor gering zu halten und die hohen Kosten für das in diesem Volumen enthaltene Frostschutzmittel nicht anfallen zu lassen, so ermöglicht die Erfindung den Fortfall des Wärmetauschers, ohne allerdings das Volumen des Frostschutzmittels zu vergrößern und auf den gesamten Wärmekreislauf zu verteilen; vielmehr wird nicht nur der Wärmetauscher sondern auch das Frostschutzmittel erfindungsgemäß eingespart. Gleichzeitig ermöglicht die Erfindung einen höheren Wirkungsgrad, da der Solarkollektor ohne zwischengeschalteten Wärmetauscher unmittelbar in das Heizsystem einspeisen kann.

Damit kombiniert die Erfindung Kostenvorteile und Umweltgesichtspunkte mit einem erhöhten Wirkungsgrad.

Ein kontrolliertes Einsetzen des Entleerens, veranlaßt durch einen Temperatursensor im Kollektor, einen Außentemperatur-Sensor oder durch Messen der Rücklauftemperatur ϑ_{R} zum Kollektor und der Vorlauftemperatur ϑ_{V} vom Kollektor können vermeiden, daß der Kollektor unnötig entleert wird und gleichwohl gegen Frostschäden sicher geschützt wird. Würde bei jeder Umgebungsbedingungen, die auch nur annähernd eine Frostgefahr bedeutet, sogleich der Kollektor entleert, so müßte sich nach kurzfristiger Änderung der zur Entleerung führenden Umgebungsbedingungen wieder ein doch einige Zeit in Anspruch nehmender Befüllungsvorgang anschließen. Wartet man dagegen zu lange mit dem Entleeren, so kann der Kollektor bereits Schaden genommen haben.

Bei der Bestimmung des Zeitpunktes, zu der ein Kollektor entleert werden muß, hat es sich überraschend als hilfreich erwiesen, wenn eine Entleerung durch "Bypass-Umwälzen" zunächst verzögert wird (Anspruch 12); gegebenenfalls kann durch diese Verzögerung eine Entleerung ganz vermieden werden, wenn die Umgebungsbedingung, die zu einer Entleerung hätte führen müssen, nur ein kurzfristiger Zustand gewesen ist.

Die Verzögerung (oder Vermeidung) des Entleerens bei gleichzeitiger Sicherung gegen Frostschäden im Kollektor kann erreicht werden, wenn (Ansprüche 13,14,15) die Vorlauftemperatur vom Solarkollektor daraufhin überwacht wird, daß sie einen bestimmten Mindestwert nicht unterschreitet, der wenig oberhalb der Gefriertemperatur liegt, beispielsweise bei etwa 1°C. Die Rücklauftemperatur zum Solarkollektor wird daraufhin überwacht, daß sie einen mäßig über Null liegenden oberen Grenzwert, insb. 4°C, nicht überschreitet. In diesem Temperaturbereich arbeitet die Umwälzpumpe und ein Mischventil, welches das Wärmetransportmedium aus dem Solarkollektor-Vorlauf unmittelbar (an dem Wärmeabgabesystem oder dem Speicher vorbei) in den Solarkollektor-Rücklauf (zur Pumpe) einspeist. Eine geringe Menge wird über denselben Mischer aus dem Wärmespeicher/ Heizsystem zur Erhöhung der frostnahen Temperatur des WTMs zugemischt. Dieser Anteil kann geregelt oder gesteuert werden (Anspruch 14).

Sowohl der Bypass-Betrieb (Anspruch 12) als auch der Zumisch-Bypass-Betrieb (Anspruch 13) halten die Rücklauftemperatur ϑ_{R} auf einem mäßig über Null liegenden Temperaturniveau. Erst wenn die Temperatur des WTM zum Solarkollektor zu hoch würde (Anspruch 14) und dennoch die Vorlauftemperatur vom Kollektor den Gefrierpunkt erreicht oder sich ihm gefährlich nähert, wird die durch die Bypass-Betriebsweisen verzögerte Entleerung eingeleitet (Anspruch 15), deren weitere Vermeidung einen zu hohen Wärmeverlust im Solarkollektor zur Folge hätte, der dem Speicher/Heizsystem von anderen Energiequellen zugeführt werden müßte.

Als Abschaltkriterium kann zusätzlich die Zeitdauer eines Bypass-Zumisch-Betriebszustandes herangezogen werden. Auch die Tendenz der Außentemperatur kann zur endgültigen Festlegung des Abschaltzeitpunktes Berücksichtigung finden.

Das offene Strömungs-Teilsystem (Anspruch 16) wird dem unteren Abschnitt (Rumpf) eines bestehenden - keine Entleerung und Befüllung erlaubenden - geschlossenen Solar-Wärmekreislaufs parallelgeschaltet. Damit erhält es letztere Eigenschaften.

Gemeinsam ist dem Strömungs-Teilsystem und dem unteren Abschnitt (Rumpf) dann jeweils der obere SolarkollektorStrömungsabschnitt, mit dem ein jeweils vollständiger Kreislauf - zu verschiedenen Zeiten und in verschiedenen Betriebszuständen - gebildet wird. Die "Parallelschaltung" von offenem und geschlossenem System in Strömungstechnik bietet daher die Vorteile des Nachrüstens bestehender Solarsysteme, des Frostschutzes und des Fortfalls des Wärmetauschers im "Rumpf", womit der Wirkungsgrad erhöht wird und gleichwohl keine Schäden am Solarkollektor mehr auftreten.

Für den Betreib im geschlossenem System arbeitet eine Förderpumpe mit geringer Leistung im Dauerbetrieb, während das Befüllen mit einer nur temporär arbeitenden leistungsstärkeren Pumpe erfolgt.

War bislang der Vorteil der Erfindung betont worden, daß Frostschäden an dem Solarkollektor vermieden werden können, wenn er rechtzeitig entleert wird, so wird mit der Erfindung auch eine Überhitzung des WTM im Solarkollektor vermieden, wenn beispielsweise durch Stromausfall ein Umwälzen des Wärmetransportmediums nicht mehr möglich ist. Auch dann wird eine Entleerung eingeleitet, um das Bilden von Dampfblasen zu vermeiden.

Um Druckschwankungen und Druckverluste im Heizkreislauf zu vermeiden, ist in den Übergangsphasen von Betrieb zu Entleeren und von Befüllen (mit/ohne Strömungs-/Ruhephase) zu Betrieb jeder der 3 Teilkreisläufe (Solarkreislauf, Rumpf, Entleerungs-/Befüllungskreislauf) voneinander getrennt. Das erreicht ein Zeitversatz in der Ventilsteuerung, der nicht thermisch gesteuerten Ventile.

Ein Ausführungsbeispiel soll das Verständnis der Erfindung vertiefen.

Die einzige Figur zeigt ein Hydrauliksystem, das einen obenliegenden Solarkollektor 3, einen ersten Hydraulikkreislauf zu einem Speicher oder Wärmeabgabesystem 1 und einen zweiten Hydraulik-Kreislauf zu einem Sammelbehälter 11 aufweist. Die beiden Teilkreisläufe sind miteinander verbunden über die Zweigstellen 20, 21.

Im normalen Betriebszustand wird von einer Pumpe 2 beispielsweise Wasser als Wärmetransport-Medium WTM aus einem Speicher 1 über eine Verbindungs-Rohrleitung 8a, einen Mischer Mi, eine kleine, im Dauerbetrieb arbeitende Pumpe 2, ein Ventil V1 und einen Solarkollektor-Zulauf 8c ("Rücklauf") dem Solarkollektor 3 zugeführt. In ihm wird das zugeführte Wasser aufgrund der Sonneneinstrahlung erwärmt, strömt nach oben und von dort über eine Rückleitung 9c, eine Rückstromsperre RS2, über Verbindungs-Rohrleitungen 9b, 9a zurück ("Vorlauf") in den Speicher 1. Damit ist dieser Betriebs-Wärmekreislauf geschlossen.

Der Speicher 1 kann ebenso ein Wärme-Abgabesystem sein, das in einen anderen Wärmekreislauf speist.

Die Pumpe 2 wird gesteuert oder geregelt, abhängig vom Wärmebedarf des Speichers 1 und von der äußeren Sonneneinstrahlung.

In der Natur der Sache "Solarkollektor" liegt es, daß dieser extremen Temperaturschwankungen ausgesetzt ist. Er muß bei Temperaturen unterhalb der Frosttemperatur genauso arbeiten, wie bei erheblicher Sonneneinstrahlung im Hochsommer. Dabei muß er im Hochsommer, wenn kein großer Wärmebedarf besteht, störungsfrei arbeiten, er muß aber auch bei sehr tiefen Außentemperaturen Wärme liefern können, die vom Heizsystem über den Speicher 1 gerade bei den erwähnten tiefen Temperaturen in starkem Maße benötigt wird. Der Solarkollektor 3 ist also keineswegs darauf beschränkt, nur im Sommer betrieben zu werden, sondern muß das ganze Jahr über betriebsbereit gehalten werden. Das kann und wird im Stand der Technik dadurch erreicht, daß er einen kleinen separaten eigenen Wärmekreislauf erhält, der Wärme über einen Wärmetauscher in einen Betriebs-Wärmekreislauf der Zentral-Heizungsanlage einkoppelt. Ein solcher Wärmetauscher wäre gemäß dem Stand der Technik zwischen den Verbindungs-Rohrleitungen 8a, 9a anzuordnen. Mit einem solchen Wärmetauscher ist es möglich, den kleinen individuellen Kreislauf des Solarkollektors und das darin strömende Wärmetransport-Medium mit einem Frostschutzmittel zu versehen, so daß der Solarkollektor 3 die skizzierten erheblichen Temperaturunterschiede verkraftet und auch bei tiefen Temperaturen und bei fehlender Sonneneinstrahlung keine Frostschäden an ihm zu befürchten sind.

Die beispielhafte Figur, die ein Ausführungsbeispiel der Erfindung darstellt, vermeidet einen Wärmetauscher, weil er einen reduzierten Wirkungsgrad zur Folge hätte. Sie vermeidet aber auch, daß das dann frei zum Speicher 1 strömende Wärmetransport-Medium ein Frostschutzmittel enthalten muß, weil ein besonderer zweiter Rohrleitungs-Kreislauf - beginnend an den Abzweigungen 20, 21 oberhalb des Ventiles V1 und der Rückstromsperre RS2 - abzweigt, der im linken Teil der Figur dargestellt ist. Mit diesem zweiten Teilkreislauf ist die Solaranlage gemäß der dargestellten Figur im oberen Bereich 8c, 3, 9c, der den Solarkollektor 3 enthält, entleerbar und wieder befüllbar; also frostschäden-gesichert.

Der zweite Teilkreislauf ist im Normalbetrieb, also bei Umwälzung des Wassers durch die Pumpe 2 und bei Lieferung von Wärme durch den Solarkollektor 3, von dem Speicher 1 abgekoppelt. Der Entleerungs- und Befüllungs-Teilkreislauf ist allerdings an den oberen Bereich 8c, 3, 9c, enthaltend den Solarkollektor 3, angekoppelt, wenn der Kollektor 3 mit dem Wasser als Wärmetransport-Medium befüllt werden muß, oder wenn er aufgrund einer kritischen Umgebungsbedingung zur Vermeidung von Frostschäden oder Überhitzung (bspw. bei Stromausfall) entleert werden soll. Der linke Teilkreislauf ersetzt dann den Restkreislauf 8a, 8b, 9b, 9a des Normalbetriebs-Kreislaufes und schaltet sich an seine Stelle.

Damit ergibt das Ausführungsbeispiel einen regelmäßigen gemeinsamen Teil des Kreislaufes, bestehend aus SolarkollektorZulauf 8c, Solarkollektor 3 und Solarkollektor-Ablauf 9c und zwei alternativ an diesen oberen Teil des Normal-Betriebskreislaufes ankoppelbare Teilkreisläufe, den Entleerungs- und Befüllungskreislauf (links dargestellt) und den unteren Teil (Rumpf) des Normal-Betriebskreislaufes (rechts im Bild dargestellt).

Unter Normalbedingungen - das war zuvor erörtert worden - fördert die Pumpe 2 das Wasser zum Solarkollektor und erhält der Speicher 1 über die geöffnete Rückstromsperre RS2 das erwärmte Wasser. Ein Mischer Mi kann das erwärmte Wasser über die Zweigstelle Z und einen Verbindungsrohrabschnitt 9d unmittelbar der Pumpe 2 zuführen, so daß ein Bypass-Betrieb unter Umgehung des Speichers 1 möglich ist. Auf diese Weise kann ohne Entnahme von Wärme eine Zirkulation im Solarkollektor 3 aufrechterhalten werden und allein durch den Transport des Wassers und die Wandtemperatur der Rohrleitung 8b, 9b erwärmt sich das Wasser geringfügig, so daß eine Außentemperatur, die als "leichter Frost" bezeichnet werden kann, vom Solarkollektor 3 verkraftet wird. Eine Entleerung kann zunächst verzögert, vielleicht sogar ganz vermieden werden.

Dieser Bypass-Betrieb, der allein den WTM-Vorlauf in den WTM-Rücklauf zum Solarkollektor 3 umwälzt, kann ergänzt werden durch Einmischen oder "Einspritzen" von wärmerem Wasser aus dem Rücklaufrohr 8a des Speichers 1 bzw. des Wärme-Abgabesystems. Das Einmischen folgt im Beispiel über einen Mischer Mi. Mit ihm kann das zugemischte Volumen des meist etwa 20° warmen Rücklauf-WTMs gesteuert oder geregelt werden und so eine dosierte Zumischung erfolgen, die nur auf das gerade notwendige Maß begrenzt ist. Die Temperaturen des WTM-Vorlaufs vom und Rücklaufs zum Solarkollektor 3 werden dabei überwacht.

Steigt die Temperatur des WTM von der Pumpe 2 (Rücklauf) aber weiter und ist die Temperatur des WTM vom Solarkollektor (Vorlauf) zu gering, so ist anzunehmen, daß die Außentemperatur auf einem "starken Frostniveau" ist, dem mit dem beschriebenen Bypass-Zumisch-Betrieb nicht mehr entgegengewirkt werden kann. Eine Solarkollektor-Entleerung wird dann eingeleitet. Dies geschieht durch Anhalten der Pumpe 2. Das Ventil V1 wird geschlossen. Geöffnet werden stattdessen die Ventile V3 und V4, die über T-Abzweigungen 21, 22 dafür sorgen, daß der Inhalt des oberen Teils des Betriebskreislaufes 8c, 9c und der Inhalt des Solarkollektors 3 über einen T-Verbinder 23, die Rohrleitung 13 und das Zuflußstück 13a in einen Sammelbehälter 11 entleert werden. Diese Entleerung geschieht allein aufgrund der Schwerkraft und bedarf keiner zusätzlichen Pump- oder Druckmechanismen. Es ist eine zweiseitige Entleerung, unmittelbar in den drucklosen Sammelbehälter 11.

Der Füllstand des Behälters 11 steigt. Die Größe des Behälters 11 sollte dabei auf das Gesamtvolumen der Rohrleitungen 8c, 9c und des Solarkollektors 3 abgestimmt sein. Der Standort des Behälters 11 ist beliebig, er kann im Keller eines Hauses stehen, er kann aber auch unmittelbar unterhalb des Solarkollektors 3 angeordnet sein, wenn sichergestellt ist, daß er nicht in einem frostgefährdeten Raum aufgestellt ist.

Die Entleerung ist innerhalb von wenigen Minuten geschehen, der Solarkollektor 3 ist dann nicht mehr frostgefährdet.

Um Druckverluste zu vermeiden sind die Ventile V3, V4 so gegen das Schließen des Ventils V1 und der Rückströmsperre RS2 zeitversetzt, daß V1/RS1 sicher geschlossen sind, bevor V3/V4 öffnen. Beim Übergang von Befüllen zum Betrieb geschieht dies umgekehrt.

Sobald es die Umgebungsbedingungen wieder erlauben, kann die Anlage - der obere Bereich 8c, 3, 9c des Normalkreislaufes - wieder befüllt werden. Dies geschieht über eine Druckanlage, die eine Kombination aus Kreiselpumpe P_{d} und einem Ausgleichsgefäß M ist und die über eine Rückstromsperre RS1 und eine Ansaugleitung 14 mit Einlaufstück 14a das Wärmetransport-Medium aus dem Bodenbereich des Sammelbehälters 11 ansaugt und über den T-Verbinder 22 (vor dem Ventil V3) der Abzweigung 20 zum Solarkollektor über die Zulaufleitung 8c zuführt. Mittels der Druckanlage 10 (bestehend aus P_{d}, M) kann ein Wasservordruck von etwa 2bar erreicht werden, der etwas unterhalb des normalen Betriebsdruckes des Solarkollektor-Kreislaufes liegt. Das zum Entleeren des Kollektors 3 offengeschaltete Ventil V4 bleibt offen und erlaubt die Rückführung des in den Solarkollektor 3 mittels der Druckanlage 10 gepumpten Wassers in den Sammelbehälter 11, abzweigend von der Zweigstelle 21 und über den T-Verbinder 23.

Weil das Ventil V3 geschlossen ist, kann die Druckanlage 10 eine stetige Strömung aufbauen, die durch den Solarkollektor 3 und über den Sammelbehälter 11 führt. Ventil V1 ist weiterhin geschlossen, die Rückstromsperre RS2 blockiert die Abzweigung 21 in Richtung des Speichers 1, da der Druck der Druckanlage 10 etwa dem Normaldruck des Systems entspricht.

Nach Ablauf von einigen Minuten, als günstig haben sich fünf bis zehn Minuten erwiesen, kann die Dauerströmung eingestellt werden. Dazu wird die Druckanlage 10 abgeschaltet; sie kann aber auch sich selbst überlassen bleiben, weil sie einen Drucksensor hat, der automatisch bei Erreichen eines bestimmten Druckes die Pumpe P_{d} abschaltet. Veranlaßt werden kann dies durch Schließen des Ventils V4 bei schon geschlossenem Ventil V3. Dieser Übergangszustand - geschlossene Ventile V3, V4 - ist die Ruhephase, in der das Hydrauliksystem eine Zeitlang verharrt. Das zuvor noch strömende Wasser beruhigt sich, es wird der stationäre Betriebsdruck aufgebaut, weil V1 und die Rückstromsperre RS2 sperren. Der obere Bereich des Solarkollektor-Kreislaufes, bestehend aus den Rohrleitungen 8c, 9c und dem Solarkollektor 3 selbst, ist dann für den erneut zu beginnenden Normalbetrieb über Pumpe 2 vorbereitet.

Die Ruhephase kann kurz sein. Entfällt die Strömungsphase, so sollte die Ruhephase deutlich verlängert werden.

Sinn und Funktion der Strömungsphase war es, Luft aus dem Kreislauf zu nehmen, die zwangsläufig sich im Solarkollektor 3 nach der Entleerung angesammelt hatte. Aufgrund der starken Strömungsgeschwindigkeit konnte diese Luft mitgerissen werden und wurde in dem Sammelbehälter 11 schnell abgeschieden. Dazu ist dort eine schrägstehende Abscheiderplatte 12 vorgesehen, die das mit Luft durchsetzte und über den Einlaß 13a in den Behälter 11 bodenseitig strömende Wasser umlenkt, so daß die gelöste Luft sich als Blasen an die Oberfläche des Füllstandes des Sammelbehälters 11 begeben kann. Hinter der Abscheiderplatte 12 ist der Ansaugstutzen 14a für Wasser, das wenig Luft gelöst hat und auch kaum noch Blasen aufweist. Dieser Ansaugstutzen 14a führt über die Druckanlage 10 - wie oben beschrieben - in den unteren Bereich des Solarkollektors 3.

Die Strömungsdauer bestimmt sich nach der Länge der Rohrleitungen 8c, 9c; sie hängt auch davon ab, welcher Typ von Solarkollektor 3 eingesetzt wird. In einem Versuch haben sich zwei bis zehn Minuten als ausreichend erwiesen, um die gesamte im Solarkollektor 3 enthaltene Luft mit der Strömung mitzureißen und im Sammelbehälter 11 abzuscheiden.

Am Ende der Strömungsphase liegt ein gut gefüllter (wenig Lufteinschluß enthaltender) oberer Teilkreislauf 8c, 3, 9c vor, der nunmehr an den unteren Teil des Hauptkreislaufes 8b, 8a, 9b, 9a anzukoppeln ist. Dazu wird das Ventil V1 geöffnet, während die Ventile V3, V4 weiterhin geschlossen bleiben. Wenn die Pumpe 2 ihren Betrieb beginnt und V1 geöffnet wird, wird der Druck erhöht und am oberen Ende der Rückstromsperre RS2 entsteht ein dynamischer hydraulischer Druck, der gleich oder etwas größer als der statische hydraulische Druck im Hauptkreislauf ist. Dadurch wird die Rückstromsperre RS2 für die Strömung durchlässig und der Normalbetrieb kann druckverlustfrei einsetzen.

Statt der Strömungsphase und vor dem Normalbetrieb können während einer Ruhephase die noch verbleibenden Luftblasen sich im oberen Bereich des Solarkollektors 3 sammeln, wo sie über einen Be- und Entlüfter 4 entweichen. Dieser Be- und Entlüfter 4 war auch wirksam beim Entleeren des Kollektors 3, um es dem Wärmetransport-Medium (Wasser) zu ermöglichen, ohne Bildung von Unterdruck allein aufgrund seiner Schwerkraft abzufließen, wenn die Ventile V4, V3 geöffnet, das Ventil V1 geschlossen und die Rückstromsperre RS2 für eine Strömung undurchlässig sind.

Auch während des Normalbetriebes kann eine weitere Entlüftung vorgesehen werden, ein der Be- und Entlüfung 4 entsprechendes Aggregat 5 kann dazu am Speicher oder Wärmeabgabesystem 1 im Rücklauf 9a vom Solarkollektor 3 angeordnet werden.

Beide Aggregate 4, 5 arbeiten mit Schwimmer und geben einen Luft-Strömungsweg frei, wenn Gasblasen sich sammeln oder der Wasserstand sinkt. Ansonsten - bei Vorhandensein von ausreichend Wasserstand - sperren sie.

Das Entleerungssystem gemäß der Figur hat also fünf Betriebszustände, die von einer mit Meßsignalen versorgten Steuerung jeweils abhängig von den Umgebungsbedingungen, wie Temperatur des Solarkollektors, Außentemperatur, Temperatur des Vorlaufes, Temperatur des Rücklaufes oder ähnliches, gesteuert ineinander übergeleitet werden.

Die Betriebszustände sind (nicht abschließend)
Normalbetrieb
Leer-Umwälzen (Bypass-Betrieb)
Leer-Umwälzen mit Zumischen (Zumisch-Bypass-Betrieb)
Entleeren
Befüllen,
wobei sich das Befüllen in zwei Stufen gliedern kann, die Strömungsphase und die Ruhephase. An die Ruhephase oder unmittelbar an die Strömungsphase schließt sich wiederum der Normalbetrieb an. Es kann sich auch das Leer-Umwälzen ggf. mit Zumischen an die Ruhephase oder die Strömungsphase anschließen.

Im Betriebszustand ist das Ventil V1 geöffnet, die Pumpe 2 aktiv und die Rückstromsperre RS2 durchlässig. Die Ventile V3, V4 an Abzweigungen 20, 21 (hydraulisch) oberhalb von V1, RS2, sind geschlossen. Die Druckanlage 10 ist abgeschaltet.

Im Bypass-Umwälzbetrieb ist die Pumpe 2 aktiv, die Ventilkonfiguration ist so geschaltet, wie zuvor. Der Mischer Mi führt das über die Rohrleitung 9b vom Solarkollektor 3 zurückkommende Wasser unmittelbar der Pumpe 2 unter regelbarer Abkopplung des Speichers 1 zu. Mit dem regelbaren Abkoppeln kann parallel dazu ein regelbares Zumischen wärmeren Wassers erfolgen. Dieser Betrieb kann bei leichtem Frost vorgesehen sein, so daß ein Entleeren des Solarkollektors 3 noch nicht erforderlich ist. Kann der Umwälzbetrieb (Bypass oder Zumisch-Bypass) nicht mehr gewährleisten, daß am/im Solarkollektor 3 keine Frostschäden eintreten, so muß der Solarkollektor 3 entleert werden.

Für die Entleerung schließt das Ventil 1, die Pumpe 2 wird abgeschaltet. Die Ventile V3 und V4 öffnen zeitverzögert und das Wärmetransport-Medium fließt in den Behälter 11, unter Einfluß der Schwerkraft. Unterstützend sollte die Belüftung 4 am oberen Endbereich des Solarkollektors 3 vorgesehen sein, um die Bildung von Unterdruck zu vermeiden. Sinkt der Wasserstand, öffnet sich eine Luftpassage.

Werden Umgebungsbedingungen erfaßt, die ein Wiederbefüllen des Solarkollektors 3 ermöglichen, so wird ein Auffüllvorgang eingeleitet. Das Ventil V1 bleibt geschlossen. Das Ventil V3 schließt und die Druckanlage 10 wird in Betrieb gesetzt. Sie saugt aus dem Sammelbehälter 11 das dort zwischengespeicherte Wärmetransport-Medium an und pumpt es in den oberen Teil des Normal-Kreislaufes. Nachdem der gesamte obere Teil des Normal-Kreislaufes mit Wasser gefüllt ist, setzt die Strömungsphase ein, in der eine Dauerströmung von der Druckanlage 10 über den Solarkollektor 3 und das Rückführ-Ventil V4, das geöffnet ist, aufrechterhalten wird. Das Hydrauliksystem wird sehr schnell "entgast", Luft-Rückstände werden mit der Strömung mitgerissen. Die mitgerissene Luft wird im Sammelbehälter 11 abgeschieden.

Nach Ende der Strömungsphase kann eine kurze Ruhephase einsetzen, in der ein Druck in dem Kreislauf aufgebaut wird, in dem das Wasser bislang zum Austreiben von Luft strömte. Dazu wird das Ventil V4 geschlossen. V3 bleibt geschlossen. Die Rückstromsperre RS2 bleibt weiter im Sperrzustand, V1 ist nach wie vor geschlossen. Der obere Teil des Solarkreislaufes 8c, 9c und der Solarkollektor 3 werden so in einen Betriebszustand gebracht, der das reibungslose und stetige Überführen in den Normalbetrieb ermöglicht. In der Ruhephase kann das System eine Weile verharren, um eine weitere Entlüftung über die Entlüftung 4 am Oberende des Kollektors 3 zu erreichen. Danach kann die Hauptpumpe 2 unter Öffnen des Ventiles V1 eingeschaltet werden. Die Rückstromsperre RS2 öffnet automatisch.

An den Normalbetrieb kann sich wiederum das Bypass-Umwälzen über die Abzweigung Z und den Mischer Mi bei geringem Frost anschließen, es kann sich aber auch bei Frosteinbruch ein sofortiges Entleeren anbieten, was durch Abschalten der Pumpe 2, Schließen des Ventiles V1 und Öffnen der Ventile V3, V4 ohne weitere Vorbereitung eingeleitet werden kann.

Das beschriebene System ist einfach aufbaubar und das Entleerungs/Befüllungs-Teilsystem kann in bestehende Solarkreisläufe (Hauptkreislauf 8a, 9a, 8b, 9b, 8c, 9c sowie Pumpe 2 und Solarkollektor 3) durch einfaches Einsetzen von Abzweigungen 20, 21 eingefügt werden.

Das beispielhafte System ist auch kostengünstig, da die Rückstromsperre RS2, Druckanlage 10 und Entleerungsbehälter 11 gängige im Handel erhältliche Bauteile sind. Für die Umsteuerung der Strömung werden nur drei gesteuerte Ventile V1, V3, V4 eingesetzt.

Die kostengünstige Lösung des Beispiels der Erfindung liegt auch in der Verkopplung von Betriebszuständen.
- So wird durch Schließen des Ventiles V1 und durch Abschalten der Pumpe 2 die Rückstromsperre RS2 die Strömung von selbst abschotten.
- Das Öffnen der Ventile V3, V4 bewirkt ohne weiteres die Entleerung.
- Nach der Strömungsphase bewirkt das Schließen des Ventiles V4 automatisch das Abschalten der Druckanlage 10, die an ihrem Druck-Vorlauf einen Drucksensor hat. Damit wird die Ruhephase allein durch Schließen des Ventiles V4 eingeleitet und stabilisiert sich von selbst.
- Das Einschalten der Pumpe 2 und das Öffnen des Ventiles V1 wiederum bewirkt das automatische Öffnen der Rückstromsperre RS2.

Ein Ausgleichsgefäß 6 und ein Sicherheitsventil 7 können am Solarkollektor-Rücklauf, insb. kurz vor der Rückstromsperre RS2 oder unmittelbar an der Abzweigung 21 des Ventiles V4, angeschlossen sein. Das Ausgleichsgefäß 6 hat stationären Betriebsdruck. Das Sicherheitsventil 7 führt mit einer Überlauf-Rohrleitung (nicht dargestellt) in den Sammelbehälter 11.

Nicht dargestellt, aber in seiner Funktion bereits erläutert ist eine Steuereinrichtung für die verschiedenen Ventile und die Druckanlage 10. Auch die Mehrzahl der möglichen Meßstellen hinsichtlich Rücklauftemperatur, Vorlauftemperatur, Kollektortemperatur (oben im Kollektor) und Außentemperatur sind nicht dargestellt. Dem Steuergerät kommt die Aufgabe zu, einen genauen Zeitpunkt zu bestimmen, zu dem ein Entleeren des Kollektors 3 unbedingt erforderlich ist, um Schäden durch die frostigen Umgebungsbedingungen zu vermeiden. Dieser Zeitpunkt will gut gewählt sein, setzt doch der Beginn des Entleerens voraus, daß anschließend ein hinsichtlich des Zeitverbrauches nicht unerheblicher Füllvorgang wieder angeschlossen werden muß. Der Füllvorgang kann aufgrund der stationären Strömungsphase, gefolgt von der dagegen deutlich kürzeren Ruhephase aber im oben erläuterten Sinn kurz gehalten werden, so daß eine Zykluszeit von etwa 20 Minuten erzielbar ist, 5 Minuten davon etwa für das Entleeren und die verbleibenden 15 Minuten für das Befüllen mit - im wesentlichen - Strömungsphase und kurzer Ruhephase.

Von Vorteil ist, daß die Steuerung einen Entleerungsvorgang nicht gleich bei Feststellen einer geringen Außentemperatur im Frostbereich veranlassen muß, sondern zunächst den Weg des Bypass-(Zumisch)-Umwälzens über den Mischer Mi die Verbindung 9d und die Zweigstelle Z sowie die Betriebspumpe 2 wählen kann. Erst wenn dieser - starke/schnelle Schwankungen der Umgebungsbedingungen dämpfende - Zwischenzustand nicht mehr ausreicht und weitergehende Bedingungen (Absinken der Vorlauftemperatur ϑ_{V} auf nahe Null°C und Erreichen des eingestellten mäßig über Null°C liegenden Grenzwertes ϑ_{RM} durch die Rücklauftemperatur ϑ_{R}) von dem Steuergerät erkannt werden, die ein Entleeren unerläßlich werden lassen, werden die Ventile V3, V4 geöffnet, V1 geschlossen und die Pumpe 2 abgeschaltet. Die Druckanlage 10 ist abgeschaltet, Rückstromsperre RS1 sperrt, der Solarkollektor 3 wird entleert.

Das technische Gebiet der Erfindung ist das Befüllen und Entleeren eines Solarkollektors 3, der mit Wasser gefüllt ist und bei dem vermieden werden soll, daß Frostschäden eintreten. Dazu wird vorgeschlagen, das Entleeren allein durch die Schwerkraft zu veranlassen und durchzuführen, wobei die zum Solarkollektor 3 hinführende Rohrleitung 8c und die vom Solarkollektor 3 zurückführende Rohrleitung 9c über jeweils eine Zweigstelle 20,21 auf einen gemeinsamen Sammelbehälter 11 geschaltet V3,V4 werden.

Vor einem Entleeren kann durch Zumischen Mi,8a warmen Wassers oder durch bloßes Umwälzen 2 im Solarkollektor-Kreislauf 8b,8c,9c,9b,Z,Mi eine (notwendige) Entleerung noch verzögert, gegebenenfalls vermieden werden.

Nach einem Entleerungsvorgang kann der Solarkollektor mittels eines Druckerzeugers 10,M,P_{d} wieder befüllt werden, wobei das Wärmetransport-Medium über eine der genannten Rohrleitungen 8c,9c in den Kollektor 3 gepumpt wird und der dabei anstehende Druck etwa dem stationären Betriebsdruck des Solarkollektor-Leitungssystems 8a,8b,8c, 9c,9b,9a entspricht.

## Patentansprüche

1. Verfahren zum Entleeren eines - mit einem Wärmetransportmedium (WTM) in einem geschlossenen Kreislauf gefüllten - Solarkollektors (3), bei dem die zum Solarkollektor (3) hinführende Rohrleitung (8c, Rücklauf) und die vom Solarkollektor (3) in einen Wärmespeicher oder ein Wärmeabgabesystem (1) führende Rohrleitung (9c, Vorlauf) über jeweils eine Strömungs-Zweigstelle (20,21) auf einen gemeinsamen, gasdrucklosen Sammelbehälter (11) geschaltet (V1,RS2,V4,V3) werden, um das WTM allein aufgrund seiner Schwerkraft aus Vorlauf und Rücklauf (8c,3,9c) gleichzeitig in den Sammelbhälter (11) ablaufen zu lassen.

2. Verfahren zum Befüllen eines (entleerten) Solarkollektors (3) mit einem Wärmetransport-Medium (WTM), insb. nach Anspruch 1, bei dem über einen - für die Strömungserzeugung gaspolsterfreien - Strömungserzeuger (10,M,P_{d}) das WTM aus einem/dem drucklosen Sammelbehälter (11) in die Vorlauf-Rohrleitung (9c) oder in die Rücklauf-Rohrleitung (8c) des Kollektors (3) geschoben wird, und zwar unter einem Druck, der etwa dem statischen Druck (Betriebsdruck) im Rohrleitungssystem (8c,9c;8b,9b;8a,9a) zwischen Kollektor (3) und Wärmespeicher/ Wärmeabgabesystem (1) entspricht.

3. Verfahren nach Anspruch 2, bei dem in einem (offenen) Kreislauf vom (14a,14,10,22,20,8c) und zum (9c,21,V4,23,13,13a) Sammelbehälter (11) für eine angemessene Zeitspanne eine stationäre Strömung des WTM durch den Kollektor (3) aufrechterhalten (10,M,P_{d}) wird (Strömungsphase).

4. Verfahren nach Anspruch 3, bei dem sich eine kurze Ruhephase des WTM im Rohrleitungssystem vom und zum sowie im Kollektor (8c,9c,3;21,V4,23,13,13a,14,14a, 10,22,20) an die Strömungsphase anschließt, in der ein stationärer - etwa dem Betriebsdruck entsprechender Druck - aufrechterhalten (10) wird (Ruhedruck).

5. Verfahren nach Anspruch 2, bei dem sich eine (längere) strömungslose Zeitspanne an den Befüllungsvorgang anschließt, innerhalb derer der wesentliche Teil der bei Befüllen eingeschlossenen Luft über eine Solarkollektor-Entlüftung (4) entweicht (Ruhephase ohne Strömungsphase).

6. Verfahren nach Anspruch 4 oder 5, bei dem das den Sammelbehälter (11) mit dem Betriebs-Rohrleitungssystem (8a,8b,8c,3;9c,9b,9a,1) verbindende Rohrleitungs-Teilsystem (14a,14,10,22,20;21,V4,23,13,13a) mit dem - den Ruhedruck aufbauenden und aufrechterhaltenden - Strömungserzeuger (10,M,P_{d}) unmittelbar nach der - längeren oder kürzeren - Ruhephase vom Betriebs-Rohrleitungssystem abgekoppelt (V4,V3,RS1) wird.

7. Verfahren nach einem der vorhergehenden Ansprüche, bei dem das WTM in den Sammelbehälter (11) beim Entleeren und in der Strömungsphase in Bodennähe einströmt (13a) und aus ihm in Bodennähe entnommen (14a) wird.

8. Verfahren nach einem der vorhergehenden Ansprüche, bei dem das WTM dem Sammelbehälter (11) auf etwa gleicher Höhe entnommen wird, wie es ihm zugeführt wird (13a,14a), wobei die in dem zugeführten WTM enthaltene Luft durch Anströmen einer insb. schräg zwischen Zulauf (13a) und Entnahmestutzen (14a) angeordneten Anströmplatte (12) aus dem WTM abgeschieden wird.

9. Verfahren nach einem der vorhergehenden Ansprüche, bei dem
- der oberste Bereich (9d) des Solarkollektors (3) be- und entlüftet (4) wird; und/oder
- der/das Wärmespeicher/Wärmeabgabesystem (1) des Solarkollektor-Betriebskreislaufes (8a,8b,8c;9a,9b,9c;1) be- und entlüftet (5) wird.

10. Verfahren nach Anspruch 2, bei dem der Solarkollektor (3) vom Strömungserzeuger (10,M,P_{d}) unmittelbar (ohne zwischenliegende Ventile oder Mischer) von seinem unteren Strömungsanschluß (8d;Rücklauf) her befüllt wird.

11. Verfahren nach einem der vorhergehenden Ansprüche, bei dem die zum Entleeren des Solarkollektors (3) geöffneten Ventile (V3,V4), die das WTM über die Strömungs-Zweigstellen (20,21) aus dem oberen Teil (8c,9c,3) des Solarkollektor-Wärmekreislaufes in den Sammelbehälter (11) zweiseitig abfließen lassen, beim Befüllen des Solarkollektors unterschiedliche Schaltzustände haben, so daß sie eine einseitige (8c) Füllströmung und eine andersseitige (9c) Rückströmung erlauben.

12. Verfahren, insbesondere nach einem der vorherstehenden Ansprüche, bei dem zum Verzögern und/oder Vermeiden von Entleerung und Befüllung des Solarkollektors (3) von ihm (3) kommendes WTM über eine Zweigstelle (Z) und einen Mischer (Mi) am Speicher/Wärmeabgabesystem (1) vorbei direkt in den Rücklauf (8b, 2) zum Solarkollektor (3) umgeleitet und umgewälzt wird (Bypass-Umwälzen).

13. Verfahren nach Anspruch 12, bei dem über den Mischer (Mi) ein wesentlicher Teil des direkt umgeleiteten (kalten) WTM mit einem geringen Teil an (wärmerem) WTM aus (8a) dem Speicher/Wärmeabgabesystem (1) gemischt und in seiner Temperatur wenig erhöht in den Vorlauf (8b,8c) gespeist wird (Zumisch-Bypass-Umwälzen).

14. Verfahren nach Anspruch 12 oder 13, bei dem über den Mischer (Mi) das Verhältnis von kaltem WTM zu wärmerem WTM so geregelt wird, daß ein vorgegebener Grenzwert (ϑ_{RM}) der Temperatur (ϑ_{R}) des WTM zum Solarkollektor nicht überschritten wird.

15. Verfahren nach einem der vorhergehenden Ansprüche, bei dem das Bypass-Zumisch-Umwälzen beendet wird, wenn die Temperatur (ϑ_{R}) des Solarkollektor-Rücklaufs (8b,8c) einen mäßig, insb. 4-10°C, über Null liegenden Grenzwert erreicht, beibehält und gleichwohl die Temperatur (ϑ_{V}) des Solarkollektor-Vorlaufs (9c,9b) nur noch geringfügig, insb. 1°C bis 2°C, oberhalb von 0°C liegt.

16. Teil-Hydrauliksystem zur Ankopplung an/in ein Solarkollektor-Wärmekreislauf (8a,8b,8c;9a,9b,9c;3,1), bestehend (nicht nur) aus
- je einem steuerbaren Ventil (V3,V4), die über (ventillose) Rohrleitungs-Strömungsverbinder (20,21) mit dem Rücklauf (8c) zum bzw. dem Vorlauf (9c) vom Solarkollektor (3) verbindbar sind;
- einem drucklosen mit dem atmosphärischen Druck in Verbindung stehenden Sammelbehälter (11), mit dem die beiden freien Ausgänge der Ventile (V3,V4) in Strömungsverbindung stehen;
- einem (leistungsstarken) Strömungserzeuger (10,M,P_{d}), der mit dem Rücklauf (8c,20) zum Solarkollektor (3) und dem drucklosen Sammelbehälter (11) direkt in Strömungsverbindung steht.

17. Teil-Hydrauliksystem nach Anspruch 16, das zwei T-Rohrverbinder (20,21) enthält, mit denen es dem unteren Teil (8a,8b,9a,9b;1) des Solarkollektor-Wärmekreislaufs (Rumpf) strömungs-parallelschaltbar ist.

18. Teil-Hydrauliksystem, bei dem der Strömungserzeuger eine Druckanlage mit Kreiselpumpe ist, die deutlich stärker dimensioniert ist als die Vorlaufpumpe (2) des Heizkreislaufs.
